## Europäisches Patentamt

## European Patent Office

### Office européen des brevets

(19)

(11) Veröffentlichungsnummer: **0 350 605**

**A2**

(12) # EUROPÄISCHE PATENTANMELDUNG

(21) Anmeldenummer: 89109442.7

(51) Int. Cl.⁴: **B05B 12/08**

(22) Anmeldetag: 24.05.89

(30) Priorität: 12.07.88 DE 3823606
20.07.88 DE 3824690

(43) Veröffentlichungstag der Anmeldung:
17.01.90 Patentblatt 90/03

(84) Benannte Vertragsstaaten:
**CH DE ES FR IT LI NL SE**

(71) Anmelder: **WAGNER INTERNATIONAL AG**
**Industriestrasse 22**
**CH-9450 Altstätten(CH)**

(72) Erfinder: **Schnetzer, Georg**
**Alte Schulstrasse 15**
**A-6841 Mäder(AT)**
Erfinder: **Gübeli, Ferdinand**
**Madrusen**
**CH-9473 Gams(CH)**

(74) Vertreter: **Münzhuber, Robert, Dipl.-Phys. et al**
**Patentanwalt Rumfordstrasse 10**
**D-8000 München 5(DE)**

(54) Zweikomponenten-Sprüheinrichtung.

(57) Bei einer Zweikomponenten-Sprüheinrichtung mit einer Pumpenanordnung aus zwei durch zumindest einen mit Druckluft gespeisten Luftmotor angetriebenen Pumpen für die beiden einer Sprühvorrichtung unter Druck zuzuführenden Sprühgut-Komponenten und mit einer Mangelsicherung zum Abschalten der Pumpenanordnung bei Auftreten eines Druckabfalls in einer der von den Pumpen zur Sprühvorrichtung führenden Sprühgutleitungen wird die Mangelsicherung aus pneumatischen Ventilen aufgebaut und in die Druckluft-Zuführleitung für die Luftmotoren eingesetzt. Dabei besteht die Mangelsicherung aus einem pneumatisch ansteuerbaren, den Durchfluß durch die Druckluft-Zuführleitung schaltenden Hauptventil, einem pneumatischen UND-Ventil, dessen Ausgang das Hauptventil steuert und aus zwei mechanisch ansteuerbaren Vorventilen, deren Druckluft-Ausgänge mit den beiden Eingängen des UND-Ventils verbunden sind. Die beiden Vorventile werden durch hydraulisch/pneumatische Drucküber- setzer gesteuert.

FIG. 1

## ZWEIKOMPONENTEN-SPRÜHEINRICHTUNG

Die Erfindung betrifft eine Zweikomponenten-Sprüheinrichtung mit Mangelsicherung gemäß dem Oberbegriff des Patentanspruches 1. Derartige Einrichtungen sind bekannt und im praktischen Einsatz.

Bei den bekannten derartigen Zweikomponenten-Sprüheinrichtungen besteht die Mangelsicherung aus elektrischen Druckfühlern, die in die Sprühgut-Leitungen zwischen den Pumpen und der Sprühvorrichtung eingesetzt sind. Tritt während des Betriebs der Zweikomponenten-Einrichtung in einer dieser Sprühgutleitungen ein Druckabfall auf, dann gibt der zugeordnete Druckfühler ein elektrisches Signal ab, das die gesamte Einrichtung abschaltet, beispielsweise in die Einrichtung eingesetzte Magnetventile schließt. Der Nachteil dieser bekannten Mangelsicherungen besteht darin, daß derartige Sprüheinrichtungen häufig zum Versprühen von Farben und Lacken verwendet werden, die bzw. deren Komponenten eine niedrige Entzündungstemperatur besitzen. Damit aber besteht die Gefahr von durch die elektrische Mangelsicherung ausgelösten Explosionen.

Aufgabe der vorliegenden Erfindung ist es deshalb, die Mangelsicherung solcher Zweikomponenten-Sprüheinrichtungen derart zu verbessern, daß ein absoluter Explosionsschutz gewährleistet ist, die Mangelsicherung aber trotzdem einwandfrei arbeitet und wenig aufwendig ist. Die Lösung dieser Aufgabe ergibt sich aus den kennzeichnenden Merkmalen des Patentanspruches 1.

Die erfindungsgemäße Mangelsicherung besteht also ausschließlich aus pneumatischen und hydraulisch/mechanischen Elementen, womit jegliche Explosionsgefahr ausgeschaltet ist. Dabei können für die pneumatischen Elemente marktübliche Ventile verwendet werden, so daß die Erstellungskosten vergleichsweise gering sind.

Besonders zweckmäßige Ausgestaltungen der Erfindung sind in den Unteransprüchen gekennzeichnet.

Auf der Zeichnung ist eine Ausführungsform der Erfindung beispielsweise dargestellt. Es zeigen:

Fig. 1 ein Schaltschema der Mangelsicherung im abgeschalteten Zustand,

Fig. 2 ein Fig. 1 entsprechendes Schaltschema in Startzustand,

Fig. 3 ein Fig. 1 entsprechendes Schaltschema im Zustand eines störungsfreien Betriebs der Pumpanordnung,

Fig. 4 ein Fig. 1 entsprechendes Schaltschema in einem Zustand, in welchem die Mangelsicherung auf eine Störung in der Pumpanordnung angesprochen hat,

Fig. 5 einen Längsschnitt durch einen Druckübersetzer für die Sprüheinrichtung von Fig. 1, und

Fig. 6 in schematischer Darstellung, teilweise geschnitten, die bauliche Kombination des Druckübersetzers von Fig. 5 mit einem Schaltventil von Fig. 1.

Die auf der Zeichnung dargestellte Mangelsicherung ist in die Druckluftleitung zwischen Druckluftquelle (Druckluftnetz) und -nicht gezeichneter-Pumpanordnung, wobei letztere üblicherweise aus zwei Luftmotoren und zwei davon angetriebenen Pumpen für die Sprühgutkomponenten besteht. Die Druckluftquelle bzw. der Anschluß an das Druckluftnetz ist mit 10 bezeichnet. Die Druckluftleitung führt dann zunächst zu einem manuell betätigbaren Zwei-Wege-Ventil 11 mit einem Ausgang A für den Sprühvorgang und einem Ausgang B für den Spülvorgang. Dieses Ventil 11 dient dazu, für die bei jeder Sprühanlage erforderlichen Spülvorgänge die dabei nicht erforderliche Mangelsicherung zu umgehen und eine -nicht gezeichnete- Sprühpumpe direkt zu versorgen. Der für den Sprühvorgang bestimmte Ausgang A des Ventils 11 führt zunächst zu einem Druckregler 12 zur Einstellung des Spritzdruckes, wobei der Druckregler 12 mit einem Durckbegrenzer zum Schutz der Luftmotoren kombiniert sein kann. Vom Ausgang A des Druckregler 12 führt die Druckluftleitung dann weiter zu einem Hauptventil 13 und durch dieses hindurch zu der -wie erwähnt- nicht gezeichneten Pumpanordnung, genauer gesagt über eine Verzweigung und gegebenenfalls weitere Druckregler zu den Einlässen der beiden Luftmotoren. Das Hauptventil 13 stellt das eigentliche Mangelsicherungsventil dar, d.h., es soll den Druckluftdurchlaß zu den Luftmotoren abschalten, wenn bei einer der beiden Sprühkomponenten ein Mangel auftritt. Die Auf-Zu-Steuerung dieses Hauptventils 13 erfolgt pneumatisch, und zwar mittels Druckluft einer Abzweigleitung, die zwischen dem Ventil 11 und dem Druckregler 12 von der eben beschriebenen Haupt-Druckluftleitung abgeht. Diese Abzweigleitung führt zunächst zu einem manuell betätigbaren Ein-Aus-Startventil und von dessen Ausgang A zu einem auf der Zeichnung Z bezeichneten Verzweigungspunkt führt, von welchem zwei Teil-Leitungen abgehen, die an den Eingängen mechanisch ansteuerbarer Vorventile 15 und 16 liegen. Die Ausgänge dieser Vorventile 15, 16 führen zu den Eingängen x, y eines pneumatischen UND-Ventils 17, also eines Ventils, das nur dann auf Durchgang schaltet, wenn an seinen beiden Durchgängen gleichzeitig Druckluft ankommt. Der Ausgang A des Ventils 17 führt zum Eingang x eines Wechselventils 18, dessen Zweck und Funktion später erläutert werden wird, wobei der Ausgang A des Wechselventils 18 am Steuereingang des Hauptventils 13 liegt.

Die -wie erwähnt- mechanische Ansteuerung der Vorventile 15,16 erfolgt über Hebel 19, 20 durch hydraulisch-mechanische Druckübersetzer 21, 22, die druckseitig mit den -nicht gezeichneten- Sprühgutleitungen zwischen den Pumpen und dem Sprühgerät in Verbindung stehen und in diesen Leitungen auftretende Sprühgut-Druckänderungen in entsprechende Bewegungen der Hebel 19, 20 umsetzen. Der Aufbau dieser Druckübersetzer 21, 22 wird später beschrieben.

Die Mangelsicherung weist zusätzlich noch einen Nebenkreis auf, der jedoch ledigl ich als Starthilfe dient. Dieser Nebenkreis weist an der auf der Zeichnung mit N bezeichneten Stelle stromaufwärts der Kreuzungsstelle Z von der vom Startventil 14 kommenden Druckluftleitung ab und führt zum Einlaß P eines manuell betätigbaren Starthilfeventils 23. Das Ventil 23 ist durch eine Feder oder dergleichen in den Sperrzustand belastet. Der Ausgang des Ventils 23 führt zu dem zweiten Eingang y des erwähnten Wechselventils 18.

Schließlich weist die Mangelsicherung noch pneumatische Anzeigeelemente auf, nämlich ein Anzeigeelement 24, welches anzeigt, ob das Startventil 14 auf Durchlaß geschaltet ist, sowie zwei Anzeigeelemente 25 und 26, die den Schaltzustand der Vorventile 15,16 anzeigen.

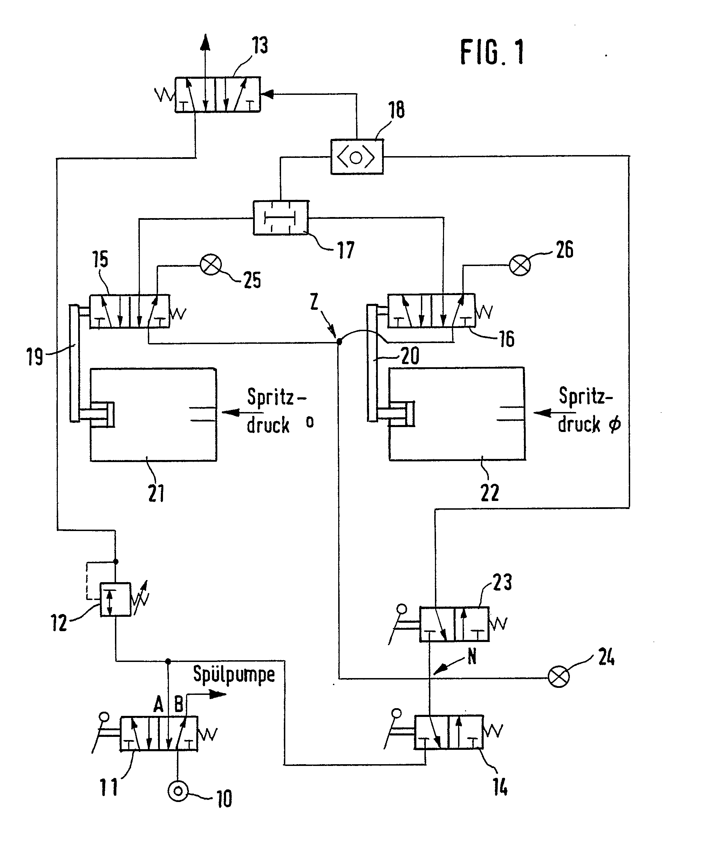

Die beschriebene Mangelsicherung arbeitet folgendermaßen. Im abgeschalteten Zustand (Ruhezustand) befinden sich alle Schaltventile im Sperrzustand, also die Ventile 13, 14, 15, 16, 17 und 23. Dieser Zustand ist in Fig. 1 dargestellt, wobei zusätzlich auch das Ventil 11 auf "Spülen" geschaltet ist, so daß die von der Quelle 10 kommende Druckluft am Eingang P des Ventils 11 ansteht. Selbstverständlich könnte im abgeschalteten Zustand das Ventil 11 bereits auf "Spritzen" stehen, in welchem Fall dann die Druckluft an den Eingängen P des Hauptventils 13 und des Startventils 14 ansteht.

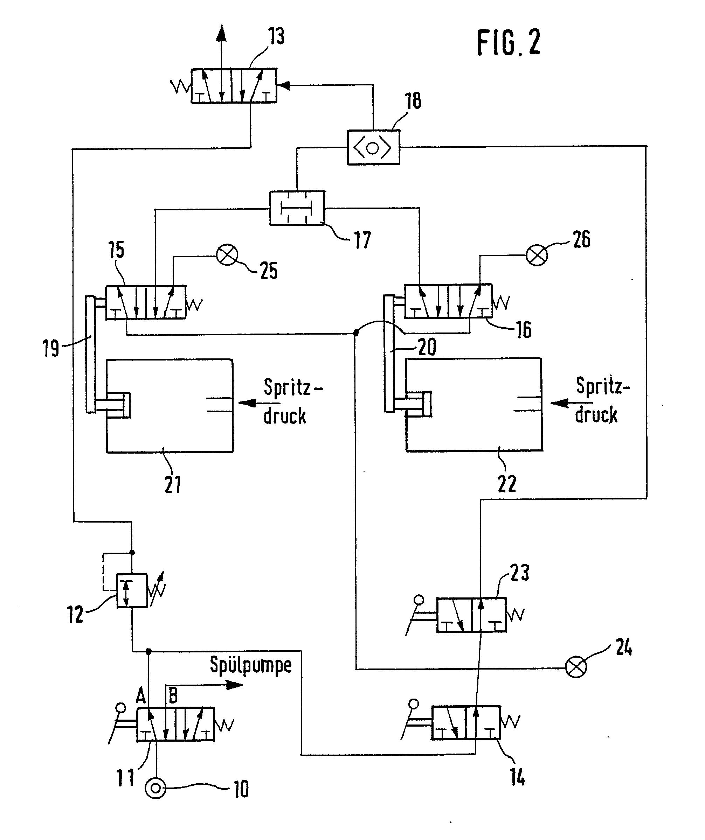

Zum Starten wird nun das Ventil 11 manuell auf "Spritzen" geschaltet und das Startventil 14 manuell auf "ein" (auf Durchlaß) geschaltet, mit der Folge, daß die Druckluft am Eingang des Hauptventils 13, an den Eingängen der Vorventile 15, 16 und am Eingang des Starthilfesignals 23 ansteht; angezeigt wird dies durch das Anzeigeelement 24. Daraufhin wird das Starthilfeventil 23 manuell gegen die Kraft seiner Feder eingedrückt und in der eingedrückten Stellung gehalten, also auf Durchgang geschaltet. Damit gelangt Druckluft zum Eingang y des Wechselventils 18. Schaltet dieses, wenn es sich in Durchgangsposition xa befinden sollte, auf Durchlaß yA, und gelangt dann zum Einlaß x des Hauptventils 13. Damit wird das Hauptventil 13 auf Durchgang geschaltet und die Druckluft setzt die Luftmotoren und die Sprühgut-Pumpen in Betrieb. Dieser Startzustand ist in Fig. 2 dargestellt.

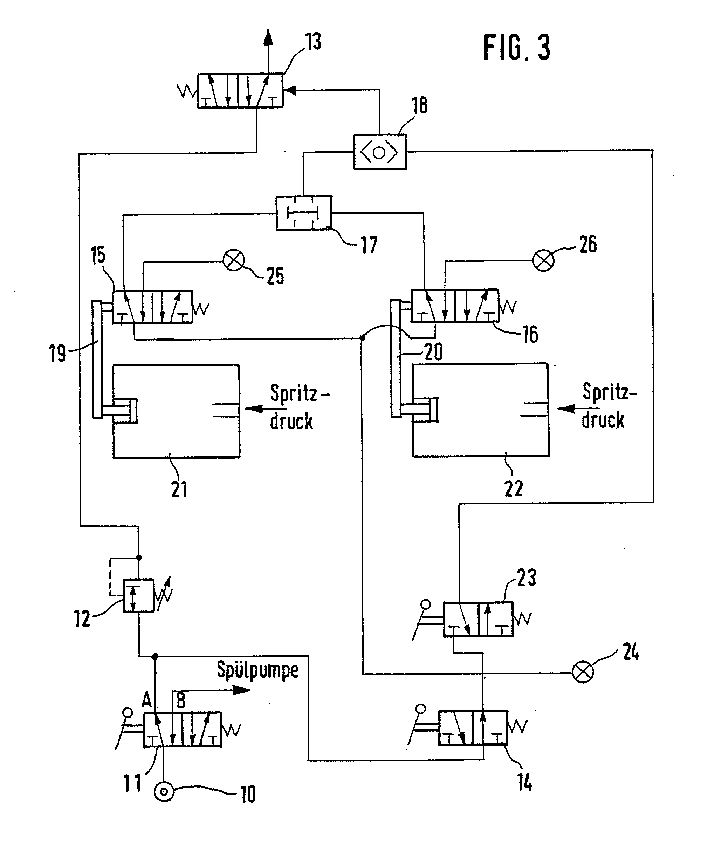

Nach einer gewissen Anlaufzeit hat sich dann der Sprühgutdruck in den Sprühgutleitungen von den Pumpen zum Sprühgerät derart erhöht, daß die Druckübersetzer 21, 22 ansprechen und über die Hebel 19, 20 die Vorventile 15, 16 auf Durchgang schalten. Dies wird durch die Anzeigeelement 25, 26 angezeigt. Von den Ausgängen der beiden Vorventile 15, 16 gelangt nun Durchluft zugleich zu den Eingängen x, y des UND-Ventils 17, mit der Folge, daß das Ventil 17 auf Durchgang schaltet und Druckluft am Eingang x des Wechselventils 18 anliegt. Läßt nun die Bedienungsperson den Schalter des Starthilfeventils 23 los, dann schaltet dieses wieder auf Sperrstellung und am Eingang y des Wechsel ventils 18 fält der Druck ab, so daß dieses auf Durchlaß xA schaltet, womit dann die beide Vorventile 15, 16 durchströmende Druckluft das Offenhalten des Hauptventils 13 übernimmt. Dies ist der "normale" Arbeitszustand, der in Fig. 3 dargestellt ist.

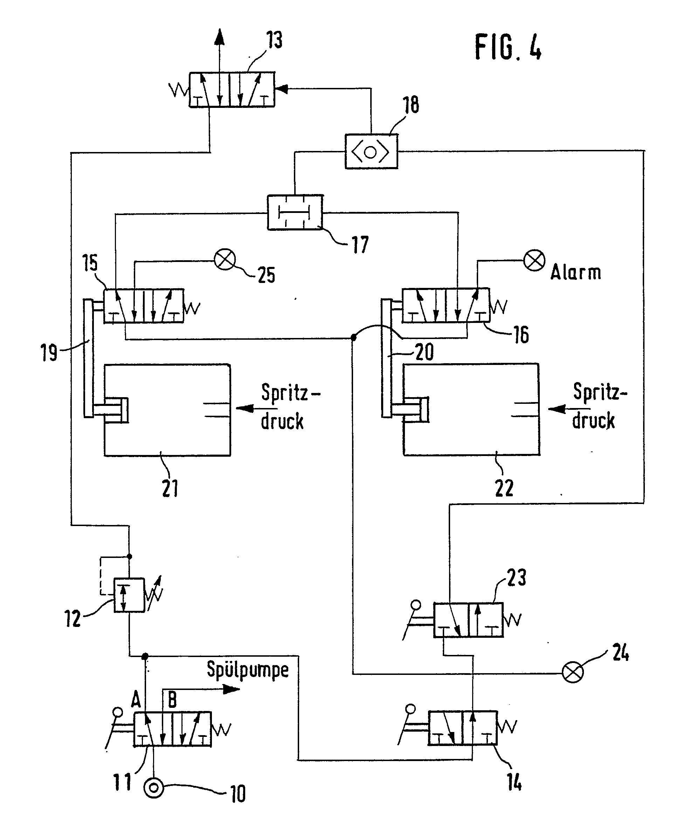

Fällt in einer der beiden Sprühgutleitungen zwischen den Pumpen und dem Sprühgerät der Druck ab, beispielsweise aufgrund einer Verstopfung der betreffenden Sprühgut-Zuführleitung zur Pumpe, dann schaltet der zugehörige Druckübersetzer 21 bzw. 22 sein Vorventil 15 bzw. 16 auf Sperrstellung, mit der Folge, daß nur einer der beiden Eingänge des UND-Ventils 17 mit Druckluft beaufschlagt wird, das Ventil 17 also schließt. Damit aber wird der Steuereingang x des Hauptventils 13 nicht mehr mit Druckluft versorgt und das Hauptventil 13 fällt in seine Sperrstellung zurück, womit die Druckluftversorgung der Luftmotoren unterbrochen und die ganze Pumpanordnung zum Stillstand gebracht wird. Dieser Abschaltzustand bei Auftreten eines Mangels einer der Sprühgut-Komponenten ist in Fig. 4 dargestellt.

Selbstverständlich ist die Erfindung nicht auf das dargestellte Ausführungsbeispiel beschränkt, sondern es sind diesem gegenüber zahlreiche Abwandlungen möglich, ohne den Bereich der Erfindung zu verlassen. Dies gilt insbesondere für den Einsatz der Druckregler und -begrenzer sowie für Starthilfekreis. Wesentlich ist, daß die beiden Druckübersetzer zwei Vorventile steuern, die ihrerseits über ein UND-Ventil das in die Versorgungsleitung für die Luftporen eingesetzte Hauptventil steuern.

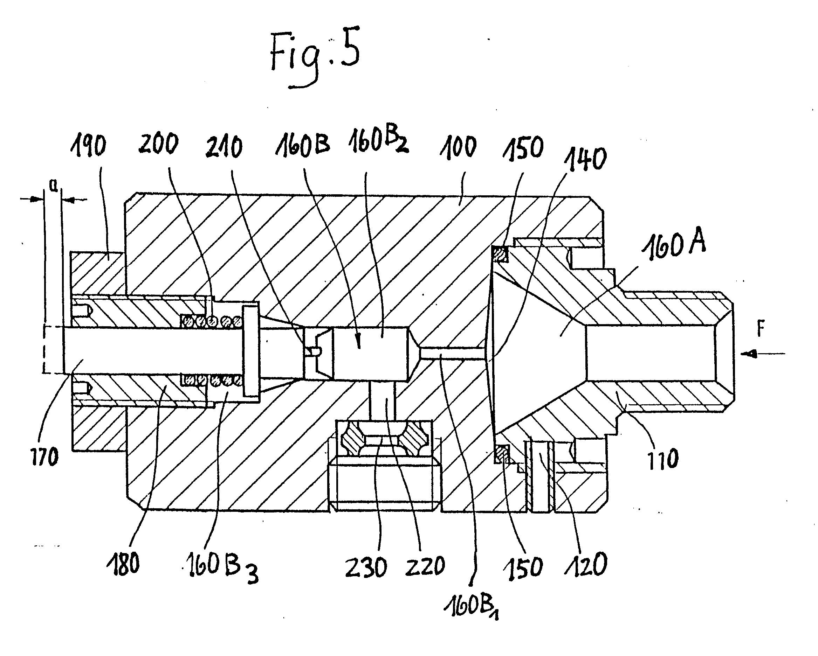

Gemäss Fig. 5 weist der Druckübersetzer 21 bzw. 22 von Fig. 1, nachfolgend Druckumsetzer genannt, ein zylindrisches Gehäuse 100 auf, das in seiner Längsachse einen durchgehenden Kanal aufweist. Auf der einen Seite des Gehäuses 100 befindet sich eine Eindrehung, in die ein Anschluss-Stuten 110 eingeschraubt ist. Der Anschlußstuten 110 ist gegen Verdrehen durch einen Kerbstift 120, der quer zum Gewinde des Einschraubstutzens verläuft, gesichert. Der Anschlußstutzen 110 haltert eine sich quer zur Gehäuse-Längs achse erstreckende Membrane 140, die unter Zwischenschaltung eines Dichtrings 150 vom Anschlußstutzen 110 gegen eine Ringfläche des Gehäuses 100 gedrückt und damit abgedichtet im Gehäuse gehaltert wird. Die Membrane 140 kann aus einem beliebigen verformbaren Material, das gegen die Druckflüssigkeit beständig ist, bestehen vorzugsweise jedoch aus nichtrostendem Stahl. Die Membrane 140 unterteilt den erwähnten Gehäusekanal in zwei Kammern nämlich in eine Kammer 160A auf der Seite des Anschlußstutzens 110 und eine auf der gegenüberliegenden Seite der Membrane befindliche Kammer 160B. Die Kammer 160B setzt sich aus drei Kammerbereichen zusammen, nämlich einer an die Membrane 140 anschliessenden Bohrung $100B_1$ vergleichsweise geringen Durchmessers, eine an die Bohrung $160B_1$ anschliessende Bohrung $160B_2$ mittleren Durchmessers und eine an die Bohrung $160B_2$ anschliessende und nach aussen mündende Bohrung $160B_3$ vergleichsweise grossen Durchmessers. In den Bohrungen $160B_2$ und $160B_3$ gleitet ein Steuerkolben 170, dessen Durchmesser in etwa gleich demjenigen der Bohrung $160B_2$ ist. Innerhalb der Bohrung $160B_3$ gleitet der Steuerkolben 170 in einer von der Aussenseite des Gehäuses her in die Bohrung $160B_3$ eingeschraubten Gewindehülse 180 die mittels einerKontermutter 190 im Gehäuse gesichert ist. Der Steuerkolben 170 ist in Richtung gegen die Membrane 140 hin belastet, und zwar durch eine Feder 200, die sich einerseits gegen die Gewindehülse 180 und andererseits gegen einen Bund 170A des Kolbens abstützt, der andererseits einen Anschlag an der Gehäuse-Ringfläche darstellt, die sich in der Ebene zwischen den beiden Bohrungsbereichen $160B_3$ und $160B_2$ befindet. Innerhalb desjenigen Kolbenbereiches, der im Bohrungsbereich $160B_2$ gleitet, ist der Kolben 170 mit einer Ring-Dichtungsmanschette 210 versehen. Im vom Kolben nicht überstrichenden Bereich der Bohrung $160B_2$ mündet eine Querbohrung 220 die zur Atmosphäre hinführt. Die Querbohrung 220 ist von aussen her durch einen Schraubstopfen 230 mit verformbarer Dichtung verschlossen.

Der Druckumsetzer arbeitet folgendermassen. Zunächst wird der Verschlußstopfen 230 abgeschraubt und über die Querbohrung 220 in den Raum zwischen Membrane 140 und Vorderstirn des Kolbens 170 eine steife Übertragungsflüssigkeit eingefüllt, vorzugsweise Öl. Daraufhin wird der Verschlußstopfen 130 wieder eingesetzt und festgeschraubt. Um diesen Raum zwischen Membrane und Kolben luftfrei zu bekommen, ist es möglich, diesen Raum zu überfüllen und mit Hilfe des Gewindestopfens 230 die Übertragungsflüssigkeit etwas vorzuspannen, so dass sich die Membrane in Richtung des Anschlußstutzens 110 auswölbt, wobei aber der Kolben 170 aufgrund der Feder 200 noch in seiner Ruhelage bleibt. Es ist aber auch möglich, die Entlüftung in der Weise vorzunehmen, dass der Raum zunächst nich überfüllt wird und eine Verdrängung der darin befindlichen Luft durch den Einschraubvorgang und die Verformung der Stopfendichtung erfolgt. Nunmehr wird der Anschlußstutzen 110 an die Flüssigkeit, deren Druck überwacht werden soll, unmittelbar oder über eine Leitung angeschlossen, beispielsweise an die Flüssigkeitsleitung zwischen Hochdruckpumpe und Sprühpistole einer Zweikomponenten-Hochdruck-Sprüheinrichtung. Damit wirkt auf die Membrane 140 in Richtung des Pfeils F ein hydrostatischer Druck, der die Membrane 140 in Richtung zum Steuerkolben 170 hin ausbeult. Diese Ausbeulung wird über die Übertragungsflüssigkeit, die als hydraulisches Gestänge wirkt, auf die Vorderstirn des Kolbens 170 übertragen, derart, dass dieser gegen die Wirkung der Felder 200 nach links (auf der Zeichnung) verschoben wird, beispielsweise um die in der Zeichnung mit a bezeichnete Strecke. Fällt nun der Druck in der angeschlossenen Flüssigkeitsleitung ab, dann schiebt die Feder 200 den Steuerkolben 170 wieder nach rechts, gegebenenfalls bis in seine Ursprungslage.

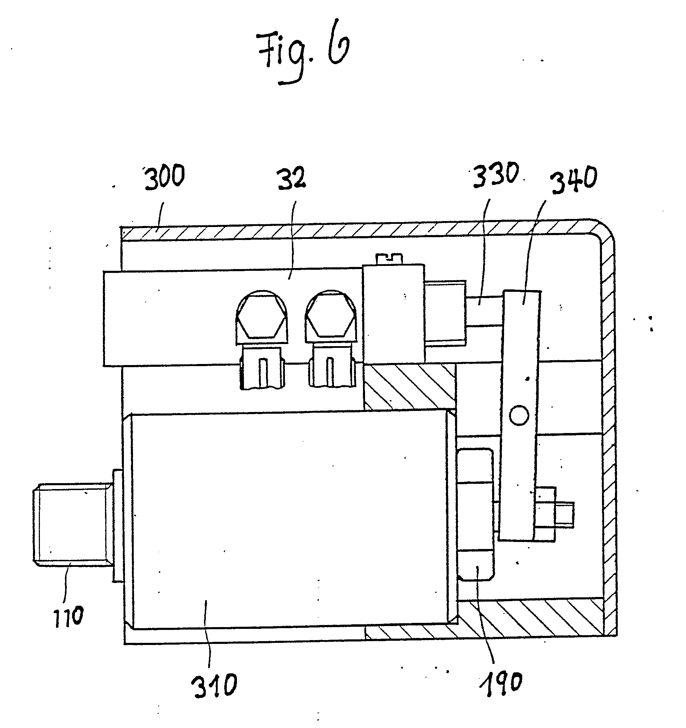

Fig. 6 zeigt ein Beispiel, wie die Bewegung des Kolbens 170 auf ein Ventil übertragen wird, nämlich auf das Ventil 15 bzw. 16 von Fig. 1. Dabei sind in einem Schutzgehäuse 300 ein hier im Ganzen mit 310 bezeichneten Druckumsetzer gemäss Fig. 5 und das pneumatische Ventil 32 untergebracht und befestigt, wobei das beispielsweise eine Druckluftleitung öffnende bzw. schliessende Ventil 32 mechanisch ansteuerbar ist, und zwar durch einen verschiebbaren Stift 330. Die Verbindung zwischen Druckumsetzer 310 und Pneumatikventil 32 erfolgt durch einen Waagebalken 340, der mittig am Schutzgehäuse 300 angelenkt ist und dessen eines Ende mit dem aus dem Umsetzer-Gehäuse 100 herausragenden Ende des Steuerkolbens 170 und mit seinem anderen Ende mit dem Betätigungsstift 130 des Ventils 32 in Wirkverbindung steht. Wird der Kolben 170 durch den Druck der zu überwachenden Flüssigkeit aus dem Übertrager-Gehäuse 100 herausgeschoben, dann wird der Steuerstift 330 in das Ventil 32 eingedrückt, lässt der Flüssigkeitsdruck nach, kann der -durch eine Feder nach aussen vorgespannte- Steuerstift des Ventils 32 wieder aus dem Gehäuse des Ventils 32 austreten.

## Ansprüche

1. Zweikomponenten-Sprüheinrichtung mit einer Pumpenanordnung aus zwei durch zumindest einen mit Druckluft gespeisten Luftmotor angetriebenen Pumpen für die beiden einer Sprühvorrichtung unter Druck zuzuführenden Sprühgut-Komponenten und mit einer Mangelsicherung zum Abschalten der Pumpanordung bei Auftreten eines Druckabfalls in einer der von den Pumpen zur Sprühvorrichtung führenden Sprühgutleitungen, dadurch gekennzeichnet, daß die Mangelsicherung in die Druckluft-Zuführleitung für den Luftmotor bzw. die Luftmotoren eingesetzt und aus pneumatischen Ventilen aufgebaut ist, nämlich einem pneumatisch ansteuerbaren, den Durchfluß durch die Druckluft-Zuführleitung schaltenden Hauptventil (13), einem pneumatischen UND-Ventil (17), dessen Ausgang das Hauptventil (13) steuert und dessen beide Eingänge an den stromaufwärts des Hauptventils (13) von der Druckluft-Zuführleitung abgehenden Zweigleitungen liegen und zwei mechanisch ansteuerbaren, den Durchfluß durch die zwei Leitungen schaltenden Vorventilen (15,16), die durch stromabwärts der Pumpen in die Sprühgutleitungen eingesetzte, hydraulisch/mechanische Druckübersetzer (21,22) gesteuert sind.

2. Zweikomponenten-Sprüheinrichtung nach Anspruch 1, dadurch gekennzeichnet, daß die Mangelsicherung zusätzlich einen Starthilfekreis mit manuell schaltbaren Starthilfeventil (23) aufweist und daß dem Steuereingang des Hauptventils (13) ein Wechselventil (18) vorgeschaltet ist, dessen einer Eingang mit dem Ausgang des UND-Ventils (17) und dessen anderer Eingang mit dem Ausgang des Starthilfeventils (23) verbunden ist.

3. Zweikomponenten-Sprüheinrichtung nach Anspruch 1 und 2, gekennzeichnet durch ein der Mangelsicherung vorgeschaltetes Startventil (14).

4. Zweikomponenten-Sprüheinrichtung nach einem der Ansprüche 1 bis 3, dadurch gekennzeichnet, daß den beiden Vorventilen (15,16) deren Schaltstellung anzeigende Anzeigeelemente (15,16) zugeordnet sind.

5. Zweikomponenten-Sprüheinrichtung nach einem der Ansprüche 1 bis 4, gekennzeichnet durch einen Druckübersetzer (21; 22) mit einem Gehäuse (100), das durch eine Membrane (140) in zwei Kammern (160 A, 160B) unterteilt ist, deren eine (160A) mit der unter Druck stehenden Flüssigkeit bzw. dem unter Druck stehendem Gas in Verbindung steht und deren andere (160 B) als zur Membrane (140) im wesentlichen senkrecht verlaufender Zylinderkanal ausgebildet ist, dessen eines Ende zur Membrane (140) hin und dessen anderes Ende zur zugeordenten Gehäuseaussenseite hin offen ist, mit einem im Zylinderkanal (160b) gleitenden Steuerkolben (170), der durch eine Feder (200) gegen die Membrane (140) belastet ist und dessen Bewegung das Steuersignal darstellt und durch ein Übertragungsfluid im Kanalraum zwischen Membrane (140) und Steuerkolben (170).

6. Zweikomponenten-Sprüheinrichtung nach Anspruch 5, dadurch gekennzeichnet, dass vom Zylinderkanal (160B) zwischen Membrane (140) und Kolben (170) eine nach aussen führende Querbohrung (220) abgeht, die durch einen elastischen Verschlußstopfen (230) verschliessbar ist.

7. Zweikomponenten-Sprüheinrichtung nach Anspruch 5 oder 6, dadurch gekennzeichnet, dass der Zylinderkanal (160B) aus drei Kanalbereichen (160B$_1$, 160B$_2$, 160B$_3$) unterschiedlichen Durchmessers besteht, wobei der Kanalbereich (160B$_1$)-kleinsten Durchmessers an die Membrane (140) anschliesst und der Steuerkolben (170) im der Membrane (140) entfernten Kanalbereich (160B$_3$) grössten Durchmessers sowie in einem Teilbereich des zwischenliegenden Kanalbereichs (160B$_2$) mittleren Durchmessers gleitet.

8. Zweikomponenten-Sprüheinrichtung nach Anspruch 7, dadurch gekennzeichnet, dass in dem Kanalbereich (160B$_3$) grössten Durchmessers eine Schraubhülse (180) als Kolben führung eingesetzt und die Kolbenfeder (200) zwischen dieser Schraubhülse (180) und einem Anschlagbund des Kolbens (170) eingespannt ist, wobei der Kolben (170) einen Durchmesser in etwa gleich dem Durchmesser des Kanalbereichs (160B$_2$) aufweist.

9. Zweikomponenten-Sprüheinrichtung nach einem der Ansprüche 5 bis 8, dadurch gekennzeichnet, dass die Übertragungsflüssigkeit zwischen Membrane (140) und Steuerkolben (170) unter einem geringen, die Membrane (140) vorspannenden Überdruck steht.

FIG. 1

FIG. 2

FIG. 3

Spritzdruck

Spritzdruck

Spülpumpe

FIG. 4

Fig. 5

# Fig. 6